# EUROPÄISCHE PATENTANMELDUNG

(11) **EP 1 065 249 A1**
(43) Veröffentlichungstag der Anmeldung: **03.01.2001**
(21) Anmeldenummer: 99810544.9
(22) Anmeldetag: 18.06.1999
(51) Int. Cl.: C08L 95/00

(54) **Bitumenpräparat**

(71) Anmelder: G. GRISARD AG, CH-4019 Basel (CH)
(72) Erfinder: Herczeg, Julius Ludwig, 4019 Basel (CH); Grisard, Ronald, 4058 Basel (CH)
(74) Vertreter: Eder, Carl E.

(57) **Zusammenfassung**

Für Anwendungen im Strassenbau wird von einem Bitumenpräparat verlangt, dass es unter Wärmeeinwirkung nicht zu rasch erweicht, und gleichzeitig bei winterlicher Kälte nicht zu spröde wird. Wichtig ist auch, dass sich die elsastoplastischen Eigenschaften eines solchen Bitumenpräparates durch den Einfluss von Luftsauerstoff nur geringfügig verändern. Erfindungsgemäss wird einem Bitumen, das mit 2.5 - 6 Gew.%, vorzugsweise 3.5-4.5 Gew.% eines Styrol-Butadien-Styrol oder eines Styrol-Isopren-Styrol-Copolymeres und eventuell mit einem pflanzlichen oder tierischen Fett versetzt ist, 0.05-0.2 Gew.% Schwefel und 0.05-0.2 Gew.% CaO·H₂O oder ZnO zugemischt und anschliessend das Gemisch bei 165°C gerührt. Das so erhaltenen Bitumenpräparat weist einen gegenüber den herkömmlichen Präparaten besonders stark erhöhten Erweichungspunkt, vorteilhafte elastoplastische Eigenschaften bei tiefen Temperaturen sowie eine geringe Empfindlichkeit gegen den Einfluss von Luftsauerstoff auf.

## Beschreibung

Die Erfindung betrifft ein Bitumenpräparat, das beispielsweise zur Herstellung von Strassenbelägen verwendet werden kann.

Das erfindungsgemässe Bitumenpräparat kann aber auch als Abdichtungsmaterial für Dächer und Mauerwerke verwendet und hierzu zum Beispiel in flüssiger Form als Membran auf die zu behandelnde Oberfläche aufgetragen werden. Das erfindungsgemässe Bitumenpräparat kann aber auch überall dort Verwendung finden, wo solche Stoffe bereits eingesetzt werden, so beispielsweise als Kaschierungsmittel in der Papierverpackung.

Das im Bitumenpräparat vorhandene Bitumen ist ein durch fraktionierte Destillation von Erdöl gewonnenes, kolloiddisperses Zweiphasensystem und damit ein Naturprodukt, dessen genaue Zusammensetzung im Allgemeinen nicht bekannt ist und variieren kann. Die verschiedenen Bitumensorten werden aufgrund ihrer Härte klassifiziert, wobei als Mass für die Härte die Penetration (bei Raumtemperatur 25°C) angegeben wird.

Das erfindungsgemässe Bitumenpräparat wird typischerweise als Bindemittel für Strassenbeläge verwendet. Für diesen Einsatzzweck muss es jedoch dünnflüssig gemacht werden, um die nötige Fliessfähigkeit zu erhalten. Dies kann erfolgen durch starkes Erhitzen oder in einer Emulsion mit Wasser oder aber durch Verwendung eines Lösungsmittels oder durch andere weichmachende Zusätze.

Eine wichtige Verwendung des erfindungsgemässen Bitumenpräparates ist die Herstellung von Deck- und Tragschichten im Strassenbau. Zur Herstellung dieser Schichten wird es vorzugsweise durch Erhitzen dünnflüssig gemacht. Wegen seiner besonderen Sauerstoffresistenz eignet es sich besonders für die Herstellung offenporiger Beläge, wie zum Beispiel Drainbelag oder Flüsterbelag. Ein solcher dient als Verschleissschicht auch noch dazu, Wasser von der Strassenoberfläche abzuführen und/oder den durch den Verkehr erzeugten Strassenlärm zu reduzieren.

Ein anderer Verwendungszweck eines auf einem erfindungsgemässen Bitumenpräparat basierenden Bindemittels ist beispielsweise die Herstellung eines Asphaltsplittbelages. Ein solcher wird auf die Oberfläche einer Strasse aufgetragen, um die Griffigkeit des Strassenbelages zu erhöhen und gleichzeitig die Strassenunterlage vor dem Eindringen von Wasser, sowie vor dem Verschleiss durch den Verkehr zu schützen. Für die Herstellung eines solchen Asphaltsplittbelages wird das erfindungsgemässe Bitumenpräparat mit Wasser in eine Emulsion überführt, oder mit einem geeigneten Lösungsmittel versetzt, um bei erhöhter Temperatur die für das Auftragen notwendige Viskosität zu erhalten.

Wie das aus der EP-B-0 568 757 bekannt ist, kann anstelle des im Bindemittel enthaltenen Lösungsmittels mit Vorteil ein geeignetes pflanzliches und/oder tierisches Öl oder Fett verwendet werden. Auf diese Weise wird vermieden, dass umweltschädliche Kohlenwasserstoffe an die Atmosphäre gelangen und gleichzeitig wird durch diesen Zusatz der Strassenbelag aufgrund von Polymerisationsprozessen verfestigt.

Eine wesentliche Eigenschaft eines Bindemittels für Strassenbeläge ist sein elastoplastisches Verhalten bei hohen und bei tiefen Temperaturen. Es ist wichtig, dass der Strassenbelag bei hohen Temperaturen, zum Beispiel bei starker Sonneneinstrahlung im Sommer, nicht so weich wird, dass sich bei Benutzung durch schwere Fahrzeuge sogenannte Spurrinnen bilden. Die Erweichungseigenschaften eines Bindemittels werden durch den Erweichungspunkt Ring und Kugel (EP RuK) charakterisiert, der die Einheit einer Temperatur hat. Auch wichtig für einen Strassenbelag ist, dass er bei tiefen Temperaturen, also beispielsweise im Winter, nicht zu spröde wird, so dass aus Spannungen im Belag Risse entstehen. Ein Mass für die Tieftemperaturelastizität eines Bindemittels ist die Fraass-Temperatur. Idealerweise beträgt der EP RuK zwischen 60 und 80°C, die Fraass-Temperatur -25 bis -10°C.

Eine bekannte Methode zur Verbesserung des elastoplastischen Verhaltens eines Bitumenpräparates ist das Zusätzen von Polymeren zum Bitumen. Wie das beispielsweise aus der US-Patentschrift 4 145 322 bekannt ist, kann unter Umständen ein Gemisch von Bitumen und einem Polymer, zum Beispiel einem Styrol-Dien-Polymer, zusätzlich noch mit Schwefel versetzt werden um die Polymere zu vernetzen, womit der EP RuK Wert weiter erhöht und die Fraass-Temperatur erniedrigt wird. Das in dieser Patentschrift offenbarte Präparat weist aber den Nachteil auf, dass nur durch die Verwendung von vergleichsweise grossen Mengen an Polymeren optimale Eigenschaften im Hochtemperaturbereich erreicht werden.

Eine weitere Problemstellung nebst der Optimierung von Erweichungspunkt und Fraass-Temperatur mittels Polymerzusätzen ergibt sich durch den Einfluss von Luftsauerstoff auf das Bindemittel. Durch Sauerstoffeinfluss werden nämlich Bitumenpräparate und bituminöse Bindemittel, insbesondere aber die darin enthaltenen Polymere, sowohl während der Präparation und Lagerung des Bindemittels als auch während der Herstellung eines Strassenbelages einem oxidativen Prozess unterworfen, der das elastoplastische Verhalten des Bindemittels negativ beeinflussen und dazu führen kann, dass der Strassenbelag spröde wird. So haben Versuche mit Bitumen, dem ein Elastoplast, nämlich ein Polystyrol- Polybutadien-Poly-styrol-Blockcopolymer mit dem Handelsnamen Kraton D-1101CM (Firma Shell) zugegeben wurde, ergeben, dass sich unter dem Einfluss von Luftsauerstoff generell eine Verhärtung einstellt. Indem sich somit die elastoplastischen Eigenschaften eines Bindemittels während der Präparation, Lagerung und Verarbeitung aufgrund der Sauerstoffeinwirkung verändern, wird verunmöglicht, dass ein Bindemittel mit bestimmten Spezifikationen auf dem Markt angeboten werden kann.

Der Erfindung liegt daher die Aufgabe zu Grunde, ein Bitumenpräparat zur Verfügung zu stellen, das seine elastoplastischen Eigenschaften unter dem Einfluss von Luftsauerstoff wenig verändert, das einen möglichst hohen Erweichungspunkt und eine niedrige Fraass-Temperatur aufweist, und das gleichzeitig kostengünstig ist, indem es einen möglichst kleinen Anteil an teuren Polymerzusätzen enthält.

Diese Aufgabe wird gelöst durch ein Bitumenpräparat, das die im Anspruch 1 angegebenen Merkmale aufweist. Gegenstand der Erfindung ist auch ein Bindemittel gemäss Anspruch 3 und ein Verfahren zur Herstellung eines Bitumenpräparates gemäss Anspruch 7.

Es wurde überraschend gefunden, dass durch Zusatz von Schwefel beim Vermischungs- und Homogenisierungsprozess von Bitumen mit einem Elastoplasten, die Empfindlichkeit eines Bitumenpräparates auf Luftsauerstoff (Alterung) praktisch beseitigt werden kann. Weiter zeigt sich in unerwarteter Weise, dass der EP RuK eines Bitumens dann besonders stark erhöht wird, wenn diesem als Polymer vorzugsweise 3.5-4.5 Gew.% eines Styrol-Butadien-Styrol oder eines Styrol-Isopren-Styrol-Copolymeres, 0.05-0.2 Gew.% Schwefel und 0.05-0.2 Gew.% CaO·H₂O oder ZnO als Katalysator zugemischt wird. Die Fraass-Temperatur des so erhaltenen Bitumenpräparates wird noch tiefer, was für die Kältebeständigkeit des Bindemittels vorteilhaft ist. In den Ausführungsbeispielen wird als Polymer Kraton D-1101CM verwendet.

Aus der US-Patentschrift 4 145 322 ist zwar bekannt, die in Bitumenpräparaten enthaltenen Polymere noch zusätzlich mit Schwefel zu vernetzen. Dies aber nicht zur Erzielung von stabilen Bindemitteleigenschaften, sondern vielmehr zur Erhöhung des EP RuK Wertes bzw. zur Erniedrigung der Fraass-Temperatur. Darüber hinaus sind die vorstehend genannten Elastoplasten sogenannte physikalisch vernetzte Polymere. Nach Spezifikation der Hersteller ist es nicht nötig, solche Polymere zur Erzielung optimaler EP RuK Werte und Fraass-Temperaturen und/oder zur Stabilisierung der elastoplastischen Eigenschaften noch zusätzlich mit Schwefel zu behandeln. Weder die US-A 4 145 322 noch die Hersteller bekannter Elastoplaste geben also irgendeine Anregung zur Lösung der erfindungsgemässen Aufgabe.

Das für den Strassenbau vorgesehene, erfindungsgemässe Bindemittel kann seine zur Herstellung des Strassenbelages nötige Fliessfähigkeit auch dadurch erhalten, indem ihm ein Lösungsmittel oder ein pflanzliches und/oder tierisches Fett und/oder Öl beigemischt wird. Es kann aber auch ohne Lösungsmittelzusätze in einer Emulsion mit Wasser oder durch Erhitzen für die Herstellung des Strassenbelages dünnflüssig gemacht werden.

Im Folgenden werden einige Ausführungen der Erfindung anhand zweier Tabellen demonstriert.

### Beispiel 1:

Ein Bitumen B 80/100 (das heisst ein Bitumen mit einer zwischen 80 und 100 liegenden Penetration) mit einem EP RuK von 45.8°C wird mit 4 Gew.% Kraton D1101 CM versetzt und während eineinhalb Stunden bei einer Temperatur von 165°C gerührt. Der EP RuK beträgt anschliessend 54.9°C. Dann werden 0.1 Gew.% Schwefel und als Katalysator 0.1 Gew.% CaO·H₂O zugesetzt und das Gemisch für weitere 20 Minuten gerührt. Das dann resultierende Bitumenpräparat hat einen EP RuK von 73.3°C und eine Fraass-Temperatur von -17°C. Beträgt unter den ansonsten gleichen Bedingungen der Kraton-D1101-CM-Anteil nur 3%, steigt der EP RuK lediglich auf 55.9°C. Wird der Anteil an Kraton D1101 CM auf 6% erhöht und gleichzeitig der Anteil an Schwefel und CaO·H₂O verdoppelt, so erhöht sich der EP RuK nur noch unwesentlich. In der Tabelle 1 sind die genauen Daten zusammen mit anderen Ausführungsbeispielen zusammengefasst. In jedem in der Tabelle dargestellten Fall wurde das Bitumen zusammen mit dem Polymer zuerst während eineinhalb Stunden bei 165°C gerührt, anschliessend der Schwefel und der Katalysator zugegeben und das entstehende Gemisch während weiterer 20 min. bei der gleichen Temperatur umgerührt.

**Tabelle 1:**

| Bitumen mit Polymer- und Schwefelzusatz. | | | | | | | |
|---|---|---|---|---|---|---|---|
| Ausgangsmaterial | | Polymerbitumen | | Polymerbitumen mit Schwefel | | | |
| Bitumen | RuK °C | Polymer | RuK °C | S | Katalysator | RuK °C | Fraass °C |
| B 40/50 | 52.1 | 4% | 60.5 | 0.1% | 0.1% CaO·H₂O | 77.5 | -11 |
| | | | | | | | |
| B 80/100 | 45.8 | 3% | 52.5 | 0.1% | 0.1% CaO·H₂O | 55.9 | |
| B 80/100 | 45.8 | 4% | 54.9 | 0.1 | 0.1% CaO·H₂O | 73.3 | -17 |
| B 80/100 | 46.8 | 6% | 58.1 | 0.2% | 0.2% CaO·H₂O | 77.5 | -17 |
| B 80/100 | 45.8 | 4% | 58.3 | 0.05 | 0.05% ZnO | 75.7 | |
| | | | | | | | |
| B 180/220 | 38.7 | 4% | 49.5 | 0.15 | 0.15% CaO·H₂O | 77.9 | -28 |
| B 180/220 | 37.5 | 6% | 75.7 | 0.1% | 0.1% CaO·H₂O | 79.0 | -19 |
| B 180/220 | 37.5 | 10% | 89.9 | 0.1% | 0.1% CaO·H₂O | 83.6 | |

### Beispiel 2:

Ein Bitumen B 180/220 mit einem EP RuK von 39.8°C wird mit 4 Gew.% Kraton D1101 CM und 4 Gew.% Leinöl versetzt und während eineinhalb Stunden bei einer Temperatur von 165°C gerührt. Der EP RuK beträgt anschliessend 49.2°C. Dann werden 0.1 Gew.% Schwefel und 0.1 Gew.% CaO·H₂O als Katalysator zugesetzt und das Gemisch für weitere 20 Minuten gerührt. Das dann resultierende Bitumenpräparat hat einen EP RuK von 73.6°C und eine Fraass-Temperatur von -25°C. Beträgt unter den ansonsten gleichen Bedingungen (aber bei doppeltem S- und CaO·H₂O-Gehalt) der Kraton-D1101-CM-Anteil nur 3%, steigt der EP RuK lediglich auf 42.8°C. Wird der Anteil an Kraton D1101 CM auf 6% erhöht und gleichzeitig der Anteil an Schwefel und CaO·H₂O ebenfalls verdoppelt, ist der EP RuK mit 69°C sogar wieder kleiner als bei einem geringeren Polymeranteil von 4%.

**Tabelle 2:**

| Bitumen mit Polymer-, Leinöl- und Schwefelzusatz | | | | | | | | |
|---|---|---|---|---|---|---|---|---|
| Ausgangsmaterial | | Polymerbitumen mit Leinöl | | | Polymerbitumen mit Leinöl und Schwefel | | | |
| Bitumen B | RuK °C | Polymer | Leinöl | RuK °C | S | Katalysator | RuK °C | Fraass °C |
| 180/220 | 38.7 | 3% | 4% | 40.3 | 0.2% | 0.2% CaO·H₂O | 42.8 | -22 |
| 180/220 | 39.8 | 4% | 4% | 49.2 | 0.1% | 0.1% CaO·H₂O | 73.6 | -25 |
| 180/220 | 39.9 | 4% | 6% | 47.7 | 0.2% | 0.2% CaO·H₂O | 69.0 | |

Folgender Versuch illustriert den Einfluss des Schwefels auf die Empfindlichkeit des Bindemittels gegen den Luftsauerstoff: Ein Bitumen B 80/100 weist eine Penetration von 89 und einen EP RuK von 46.7°C auf. Nach 14 Stunden Rühren bei 165°C unter Lufteinwirkung beträgt die Penetration 21 und der EP RuK 73.2°C. Einer anderen Probe mit Bitumen B 80/100 (Penetration: 91, EP RuK 45.8°C) wird 0.1 Gew.% Schwefel und 0.05 Gew.% ZnO zugegeben. Nach 14 Stunden Rühren unter Lufteinwirkung beträgt die Penetration 66 und der EP RuK 48.7°C, das heisst die elastoplastischen Eigenschaften des zusätzlich mit Schwefel behandelten Bitumens haben sich gegenüber dem nicht behandelten Bitumen praktisch nicht verändert.

Eine solche Verhärtung des Bitumenpräparates in Funktion der Zeit unter dem Einfluss von Luftsauerstoff kann unabhängig davon, ob das Bitumen mit Polymeren und/oder Leinöl versetzt oder naturbelassen ist, in Rührversuchen festgestellt werden. Es kann aber ebenfalls gezeigt werden, dass dieselben elastoplastischen Eigenschaften nur noch geringfügig durch den Luftsauerstoff beeinflusst werden können, wenn das Präparat in der vorstehend beschriebenen Art mit Schwefel versetzt worden ist. Dass dies wie im vorstehend beschriebenen Beispiel dargelegt auch für das naturbelassene Bitumen gilt, demonstriert, dass die Wirkung des Schwefels sich nicht auf Vernetzung der im Bitumenpräparat enthaltenen Polymere beschränkt, so wie das etwa in der US-A-4 145 322 offenbart ist.

Die vorstehend beschriebenen Effekte (Wirkungen) der Zusatzstoffe sind nicht nur bei einem im Werk hergestellten Bindemittel zu finden, sie können auch bei der Mischgutherstellung in einer Asphalt-Heiss-Mischanlage erwartet werden, wobei Mischguttemperatur, Transport- und Einbauzeiten von Bedeutung sind.

Wie bereits vorstehend bemerkt eignet sich das erfindungsgemässe Bitumenpräparat hervorragend für Anwendungen im Strassenbau. Beispielsweise durch den Zusatz von Leinöl (Ausführungsbeispiel 2) oder von anderen pflanzlichen oder tierischen Fetten oder auch von Lösungsmitteln wird es zu einem geeigneten, warm aufzutragenden Bindemittel zur Oberflächenbehandlung von Strassenbelägen. Ohne Zusatz von pflanzlichen und/oder tierischen Fetten und/oder Ölen ist das erfindungsgemässe Bindemittel aufgrund seiner Oxidationsresistenz aber auch besonders gut geeignet für die Herstellung von offenporigen Strassenbelägen, wie zum Beispiel Drainbelägen.

Abschliessend sei noch folgendes bemerkt: Eine gute Oxidationsresistenz ist bei jeder möglichen Applikation von Bitumen von grossem Vorteil, insbesondere bei sehr hoher Anwendungstemperatur (Gussasphalt, Dachpappe, allgemeine industrielle Anwendungen).

## Patentansprüche

1. Bitumenpräparat, das zum Teil aus Bitumen besteht und mindestens ein Polymer sowie Schwefel enthält, dadurch gekennzeichnet, dass es ein Styrol-Butadien-Styrol-Copolymer und/oder ein Styrol-Isopren-Styrol-Copolymer besitzt und dass der Polymeranteil 2.5 - 6 Gew.% und der Schwefelanteil 0.05 - 0.2 Gew.% beträgt.

2. Bitumenpräparat nach Anspruch 1, dadurch gekennzeichnet, dass der Polymeranteil 3.5 - 4.5 Gew.% beträgt.

3. Bindemittel enthaltend ein Bitumenpräparat nach einem der Ansprüche 1 oder 2 zur Verwendung im Strassenbau.

4. Bindemittel nach Anspruch 3 zur Herstellung eines Drainbelages oder einer anderen Verschleiss- oder Tragschicht, wozu das Bindemittel durch Erhitzen dünnflüssig gemacht wird.

5. Bindemittel nach Anspruch 3 zur Herstellung eines Asphaltbelages, wozu das Bindemittel in einer Emulsion mit Wasser dünnflüssig gemacht wird.

6. Bindemittel nach Anspruch 5, dadurch gekennzeichnet, dass es zusätzlich zum Bitumenpräparat 2 bis 30 Gew.% mindestens eines tierischen und/oder pflanzlichen Fettes oder Öles enthält.

7. Verfahren zur Herstellung eines Bitumenpräparates nach einem der Ansprüche 1 oder 2, dadurch gekennzeichnet, dass
- ein mindestens mit Styrol-Butadien-Styrol-Copolymeren oder Styrol-Isopren-Styrol-Copolymeren versetzter Bitumen bei einer Temperatur zwischen 120 und 240°C homogenisiert wird,
- Schwefel dazugegeben wird,
- und dass anschliessend das so gebildete Bitumenpräparat während mindestens zwanzig Minuten weiter vermischt wird.

8. Verfahren nach Anspruch 7, dadurch gekennzeichnet, dass gleichzeitig mit dem Schwefel ein als Katalysator agierender Zusatzstoff zugegeben wird.

9. Verfahren nach Anspruch 8, dadurch gekennzeichnet, dass als Katalysator 0.05 bis 0.2 Gew.% CaO·H₂O oder ZnO beigemischt wird.

10. Verfahren nach Anspruch 8 und 9, dadurch gekennzeichnet, dass der Schwefel und der Katalysator dem naturbelassenen Bitumen als Alterungsschutz zugegeben wird.
